Europäisches Patentamt

European Patent Office

Office européen des brevets

(19)

(11) Publication number:

**0 273 187 B1**

(12) **EUROPEAN PATENT SPECIFICATION**

(45) Date of publication of patent specification: **20.03.91**   (51) Int. Cl.⁵ **C08J 5/06, D02G 3/48**

(21) Application number: **87117173.2**

(22) Date of filing: **20.11.87**

(54) Composite structure of steel cord and rubber.

(30) Priority: **21.11.86 JP 279101/86**

(43) Date of publication of application:
**06.07.88 Bulletin 88/27**

(45) Publication of the grant of the patent:
**20.03.91 Bulletin 91/12**

(84) Designated Contracting States:
**DE FR GB**

(56) References cited:
**DE-A- 3 027 277**
**GB-A- 1 364 781**

**CHEMICAL ABSTRACTS, vol. 84, 1976, page
39, abstract no. 5914v, Columbus, Ohio, US**

(73) Proprietor: **TOYO TIRE & RUBBER CO., LTD .
17-18, Edobori 1-chome
Nishi-ku, Osaka-shi, Osaka-fu(JP)**

(72) Inventor: **Omura, Eizi
12-30, Simochujo-cho
Ibaraki-shi Osaka-fu(JP)**
Inventor: **Ohama, Simako
1-40-703, Santanda-cho, 2-chome
Amagasaki-shi Hyogo-ken(JP)**

(74) Representative: **Barz, Peter, Dr. et al
Patentanwälte Dipl.-Ing. G. Dannenberg Dr.
P. Weinhold, Dr. D. Gudel Dipl.-Ing. S. Schu-
bert, Dr. P. Barz Siegfriedstrasse 8
W-8000 München 40(DE)**

## Description

The present invention relates to a composite structure comprising a steel cord and a rubber.

Cords for use in the carcasses of tires include steel cords which are excellent cords having high strength. However, the steel cord requires a sophisticated technique for adhesion to rubber and has the problem of rusting when the rubber surrounding cords is injured and then water permeates to cords through wound.

To overcome the above problems, JP-A- 116463/1974 and 117582/1974 disclose an antirusting oil containing a benzenetricarboxylic acid ester, and naphthenic acid or an alkylarylsulfonic acid ester, and a pneumatic tire treated with the oil for rust inhibition. Further JP-A- 10454/1981 discloses a coating composition comprising a rust inhibitive surfactant and a hydrocarbon having a melting point or softening point of at least 50°C. Material having high melting point was used for rust inhibitor due to its tack free property.

In GB-A-1 364 781 a mineral oil solution containing an organic acid salt of an aliphatic amine is used to improve the adhesion between cord and rubber.

DE-B-2 824 173 discloses a conveyor belt material containing a paraffinic or naphthenic mineral oil as an anti-rusting agent.

In US-A- 3 802 906 a rubber bondable metal surface is first treated with a specific mixture of trichloroethane and an organic wax and subsequently abraded with glass wool.

Generally, prior-art techniques are directed chiefly to the inhibition of rust, so that rust inhibitors or surfactants have heretofore been widely used which have a intricate chemical structure and which include those containing a toxic chemical substance. Use of conventional rust inhibitors further has the drawback of failing to give improved adhesion between the steel cord and rubber or permitting the steel cord to be stripped of its plating when injured. Further if the steel cord, which is stored in a cold dark place, is unpacked in a hot humid place, the condensation of water vapor is likely to rust the steel cord, so that there arises a need to hold the steel cord in the hot humid place for the rise of temperature before unpacking or to unpack the steel cord in a dehumidified chamber.

An object of the present invention is to provide a composite structure of a steel cord and a rubber wherein the steel cord is inhibited from rusting without using any harmful chemical substance and is given improved adhesion to the rubber.

Another object of the invention is to provide a composite structure of a steel cord and a rubber which is free of the likelihood that the component filaments of the steel cord will be injured and stripped of their plating before the cord is embedded in the rubber.

Another object of the invention is to provide a composite structure of a steel cord and a rubber which assures a facilitated calendering procedure for embedding the steel cord in the rubber.

Still another object of the invention is to provide a composite structure of a steel cord and a rubber which does not require air conditioning; dehumidification or the like for the calendering procedure or for storage to achieve great savings in power consumption.

The present invention provides a composite structure of a steel cord and a rubber composition which is characterized in that the steel cord is provided with a coating comprising, as its main component in an amount of at least 50 weight percent, a hydrocarbon oil having a melting point or softening point of up to 40°C and being free of amine salts, said oil being applied to the cord in an amount of 5 to 1000 mg/m² and said rubber composition containing up to 15 parts by weight of oil per 100 parts by weight of rubber.

The hydrocarbon oil to be used in the present invention is up to 40°C in melting point or softening point. If the coating becomes solid at room temperature like the one disclosed in JP-A- 10454/1981, the coating fails to lubricate the cord. The oil must therefore be liquid to afford lubricity. Examples of desirable hydrocarbon oils are process oils for rubbers, machine oils and the like. Especially desirable are naphthenic process oils for rubber composition.

According to the invention, a steel cord is coated with the hydrocarbon oil during the process of final drawing through the embedding of the cord in a rubber. The cord can be coated, for example, by dipping the cord in the hydrocarbon oil, applying the oil to the cord with gauze having impregnated it or applying the oil as diluted with a solvent. The oil is applied to the cord in an amount of 5 to 1000 mg/m². Even if the amount is less than 5 mg/m², a rust inhibitory effect is available, but insufficient lubrication will then permit filaments to be injured and stripped of the plating by rollers or the like due to friction when they are twisted into the steel cord. Amounts exceeding 1000 mg/m², although effective for preventing rusting or injury, swell the rubber to result in reduced adhesion. Conjointly usable with the hydrocarbon oil of the present invention are up to 50wt.% of other components, such as benzenetricarboxylic acid esters, naphthenic acid esters and alkylarylsulfonic acid esters.

With the present invention, the oil diffuses and permeates into the rubber, for example, during vulcanization, giving the rubber improved tear resistance and enhanced adhesion. The amount of the oil to be contained in the rubber composition is up to 15 parts (by weight, the same as hereinafter), preferably up to 10 parts, per 100 parts of the rubber. When present in an excessive amount, the oil swells the rubber surrounding cords to produce an adverse effect.

The composite structure of steel cord and rubber of the present invention is usable, for example, for pneumatic tires, belts, hoses, hoses for transporting concrete, etc.

The present invention has the following advantages.

1. In the process for producing the steel cord, the filaments can be prevented from breaking or being stripped of the plating when rubbed against one another or against rollers or the like.

2. During the vulcanization of rubber, the oil diffuses through the rubber, giving improved tear resistance and consequently affording enhanced adhesion.

3. The creel room for winding off cords on reel before embedding the steel cord in the rubber usually requires great power consumption for maintaining the room at a low temperature to prevent condensation of water vapor, whereas the present composite structure, which is free of rusting even when exposed to water vapor condensate, needs no dehumidification and achieves savings in power.

4. After the steel cord has been embedded in the rubber, the resulting assembly does not require humidification for preventing the cord from rusting in the unvulcanized rubber. This assures a great reduction in power consumption.

The invention will be described in greater detail with reference to the following examples.

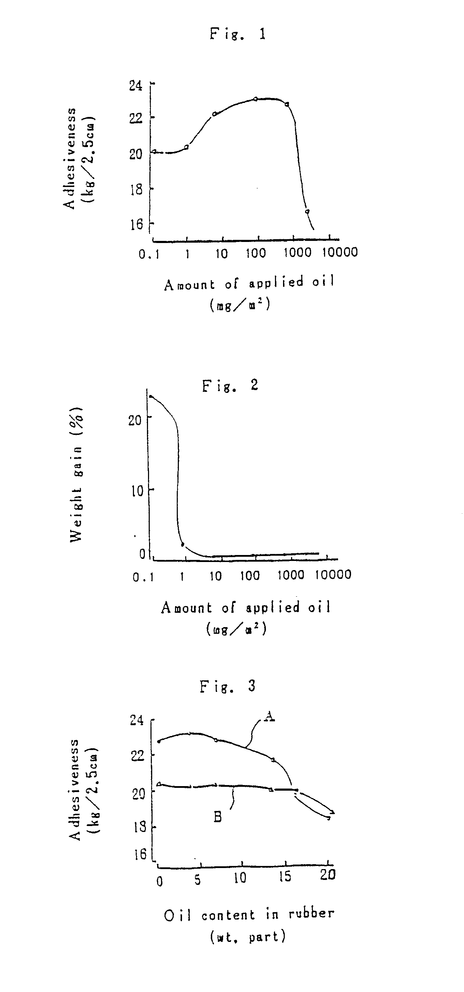

Figs. 1 and 2 are graphs respectively showing the relation between the amount of applied oil and the adhesiveness and the relation between the amount of applied oil and the weight gain due to rusting. Fig. 3 is a graph showing the relation between the oil content of rubber and the adhesiveness.

Example 1

SUNTHENE® 310, product of Nippon Sun Oil Co., Ltd., as diluted to 15% with industrial gasoline No. 4, was applied to steel filaments by wetting with gauze having impregnated oil before twisting. Using a double-twist type buncher, the filaments were twisted at 3000 r.p.m. into a steel cord, 3X0.20 + 6X0.38.

Rubber sheets, 0.7mm in thickness, were prepared from the following composition. The steel cord obtained above was arranged on one of the rubber sheets in an amount of 12 cords/inch (1 inch = 2.54 cm), another one of the sheets was placed over the arrangement of steel cord, and the superposed sheets were pressed together to obtain an unvulcanized rubber sheet, 2 mm in thickness, having the steel cord incorporated therein. Two unvulcanized rubber sheets thus obtained are affixed to each other with the lengths of cord positioned in parallel and then vulcanized at 140°C for 40 minutes. The resulting assembly was cut to a width of 2.5 cm to obtain a composite structure. An incision was made in the composite structure at its center, and the structure was measured for peeling strength by peeling off the upper layer from the lower layer to determine the adhesiveness.

| Natural rubber | 100 parts by weight |
|---|---|
| HAF (Carbon black) | 55 |
| ZnO | 7 |
| Stearic acid | 1 |
| Polytrimethylhydroquinone | 2 |
| $SiO_2$ | 8 |
| Resorcin | 2.5 |
| Cobalt naphthenate | 2.5 |
| Sulfur | 4 |
| Dicyclohexylbenzthiazylsulfeneamide | 0.8 |

Table 1 shows the number of breaks of filaments during twisting and the adhesiveness measured by the above method. The terms listed in the table have the following meanings.

(1) Break number ratio: The number of breaks occurred in twisting filaments into 1 ton of steel cord, as expressed in terms of the ratio thereof relative to the corresponding break number of conventional product which was taken as 100.

(2) Amount of injuries: The filaments, 0.38mm in diameter, of the cord were checked by an X-ray microanalyzer for the intensity of $CuK\alpha$ rays while rotating the cord one turn to calculate the coefficient of variation of the intensity. The amount of injuries is expressed in term of the calculated value relative to the corresponding value of conventional product which was taken as 100.

(3) Adhesiveness: The ratio of the above-mentioned measurement to the corresponding value of conventional product which was taken as 100.

## Table 1

| | Ex. 1 | Conventional one |
|---|---|---|
| Break number ratio | 21 | 100 |
| Amount of injuries | 5 | 100 |
| Adhesiveness | 112 | 100 |
| Amount of applied oil | 67 | 0 |

## Example 2

The cord of Example 1 was held in an atmosphere of 5°C and 20% RH for 60 minutes, and immediately transferred into an atmosphere of 40°C and 95% RH, in which the cord was allowed to stand for 10 minutes. After subjecting the cord to this cycle for 3 days, the weight gain due to rusting was measured. Consequently, the cord exhibited a weight gain of 0.1% and retained the original color of gold. When a conventional oil-free cord was similarly tested for comparison, the cord exhibited a weight gain of 26.2% and a color change to reddish brown due to rusting. These results indicate that the factory need not be dehumidified when preparing the present composite structure.

4

Example 3

To vary the amount of oil to be applied to the steel cord, the oil was diluted to varying ratios. The same procedure as in Example 1 was repeated using the dilutions to determine the adhesiveness and the weight gain. Figs. 1 and 2 show the results.

Example 4

The same procedure as in Example 1 was repeated with the exception of varying the oil content of rubber incorporating the steel cord. Fig. 3 shows the adhesiveness measured. Curve A represents the result achieved using the steel cord of Example 1, and curve B the result obtained using an oil-free steel cord for comparison.

## Claims

1. A composite structure of a steel cord and a rubber composition, characterized in that the steel cord is provided with a coating comprising, as its main component in an amount of at least 50 weight percent, a hydrocarbon oil having a melting point or softening point of up to 40°C and being free of amine salts, said oil being applied to the cord in an amount of 5 to 1000 mg m² and said rubber composition containing up to 15 parts by weight of oil per 100 parts by weight of rubber.

2. The composite structure of claim 1 wherein the hydrocarbon oil is a naphthenic oil.

3. A pneumatic tire comprising a composite structure according to claims 1 or 2 as a reinforcement.

## Revendications

1. Matériau composite à base de corde en acier et d'une composition de caoutchouc, caractérisé en ce que la corde en acier est revêtue d'un enduit comprenant, en tant que principal composant en une quantité d'au moins 50% en poids, une huile hydrocarbonée ayant un point de fusion ou un point de ramollissement allant jusqu'à 40°C et dépourvu de sels d'amine, cette huile étant appliquée sur la corde en une quantité de 5 à 1000 mg m² et cette composition de caoutchouc contenant jusqu'à 15 parties en poids d'huile pour 100 parties en poids de caoutchouc.

2. Matériau composite suivant la revendication 1, caractérisé en ce que l'huile hydrocarbonée est une huile naphténique.

3. Bandage pneumatique, caractérisé en ce qu'il comprend un matériau composite suivant les revendications 1 ou 2 en tant que renforcement.

## Ansprüche

1. Verbundstruktur aus einem Stahlkord und einer Gummizusammensetzung, dadurch gekennzeichnet, daß der Stahlkord mit einer Beschichtung versehen ist, welche als Hauptkomponente ein Kohlenwasserstofföl mit einem Schmelzpunkt oder Erweichungspunkt bis zu 40°C, das frei von Aminsalzen ist, in einer Menge von mindestens 50 Gewichtsprozent umfaßt, wobei das Öl auf den Kord in einer Menge von 5 bis 1000 mg/m² aufgebracht ist und die Gummizusammensetzung bis zu 15 Gewichtsteile Öl pro 100 Gewichtsteile Gummi enthält.

2. Verbundstruktur nach Anspruch 1, worin das Kohlenwasserstofföl ein Naphthenöl ist.

3. Luftreifen, umfassend eine Verbundstruktur nach Anspruch 1 oder 2 als Verstärkung.

Fig. 1

Fig. 2

Fig. 3

6